# EUROPEAN PATENT SPECIFICATION

(11) **EP 3 286 274 B1**
(45) Date of publication and mention of the grant of the patent: **25.12.2019**
(21) Application number: 16719785.4
(22) Date of filing: 08.04.2016
(51) Int. Cl.: C09J 133/06

(54) **AQUEOUS COLD SEAL ADHESIVE**
WÄSSRIGER KALTSIEGELHAFTSTOFF
COLLE À FROID AQUEUSE

(30) Priority: 20.04.2015 EP 15164275
(43) Date of publication of application: 28.02.2018
(73) Proprietor: BASF SE, 67056 Ludwigshafen am Rhein (DE)
(72) Inventor: NABIFAR, Afsaneh, 68161 Mannheim (DE); SCHUMACHER, Karl-Heinz, 67433 Neustadt (DE); KUNTZ, Andrea, 76835 Burrweiler (DE); KIENER, Christoph, 67256 Weisenheim am Sand (DE); BEK, Martin, 8521 Sint Nicolaasga (NL)
(74) Representative: BASF IP Association
(86) International application number: PCT/EP2016/057724
(87) International publication number: WO 2016/169788

(56) References cited:
- US-A- 5 567 773
- US-A1- 2007 158 023
- US-A1- 2011 152 052
- US-A1- 2014 322 553

## Description

The invention according to claims 1 to 9 relates to an aqueous cold seal adhesive in the form of an aqueous polymer dispersion comprising a mixture of a specific first polymer with low glass transition temperature and a specific second polymer with high glass transition temperature, both polymers prepared in the presence of protective colloids.

Cold-seal adhesives are bonding compositions which, following application to and drying on a substrate, are not tacky to the touch, yet bond to one another when pressed against one another at room temperature with pressure. They differ from pressure-sensitive adhesives in the absence of, or only very low, tack at room temperature. They differ from heat-sealable compositions in that they can be adhered to one another under pressure without heat activation. Known applications of cold-sealable compositions include, for example, the closing of pouchlike packs, more particularly for foods or other heat-sensitive products in whose packaging the use of heat is undesirable, such as ice cream or chocolate, for example, or when fast packing speeds and high cycle rates are required. Typically, for cold-seal adhesives, polymer dispersions based on natural rubber latex are used. Disadvantages associated with natural rubber latex include a comparatively high price volatility, natural fluctuations in the quality of the natural raw material, and, in particular, the allergenic potential harbored by these natural products. There is a desire for cold-sealable compositions which as far as possible are free from organic solvents, i.e. for aqueous dispersions of polymers which, after drying, form a cold-sealable coating.

The flexible packaging industry is interested in synthetical alternatives to common natural rubber-based cold seal adhesives. WO 2011/073221 describes acrylic dispersions for cold seal applications. Such acrylic dispersions may cause blocking problems when coils of coated films are produced due to a residual tackiness of the coating. Coated substrates should be as much as possible block resistant prior to the cold sealing so that they can be rolled up into rolls and stored prior to use, without adhesion to the opposite other side of the carrier substrate. Reducing the residual film tackiness is often associated with undesired impairing of seal strength of the cold seal.

It is an object of the invention to provide cold seal adhesives with improved blocking resistance without significantly impairing cold seal strength and which, furthermore, are as far as possible free from allergenic potential and from organic solvents, and which can be applied as effectively as possible by conventional application technologies (such as printing, for example) to suitable substrates, more particularly to film substrates.

The object is achieved in accordance with the invention by means of an aqueous cold seal adhesive in the form of an aqueous polymer dispersion comprising a mixture of at least one first polymer and at least one second polymer
wherein the first polymer is an emulsion polymer composed to an extent of at least 60% by weight of principal monomers selected from the group consisting of C1 to C20 alkyl (meth)acrylates, the first polymer being preparable by emulsion polymerization of free-radically polymerizable monomers in the presence of at least one protective colloid and the first polymer having a glass transition temperature of less than 0°C;
wherein the second polymer is an emulsion polymer composed to an extent of at least 60% by weight of principal monomers selected from the group consisting of vinylaromatics having up to 20 C atom, the second polymer being preparable by emulsion polymerization of free-radically polymerizable monomers in the presence of at least one protective colloid and the second polymer having a glass transition temperature of at least 50°C or more.

Cold-sealable means that, when two surfaces coated with a composition of the invention and dried are contacted with exertion of pressure at temperatures less than 40°C, more particularly less than 30°C or less than 25°C, especially at room temperature (20°C), they bond to one another. The adhesion (autoadhesion) after sealing at 20°C and 1.4 bar is preferably at least 2 N/15 mm, or more than 2 N/15 mm, measured in accordance with the method described in the examples for determining the sealed seam strength. In practical application, cold sealing takes place advantageously at ambient temperature, in other words in general at temperatures of 10 to 30°C, more particularly 15 to 25°C, and under pressures of a few millibar up to several bar above atmospheric pressure (1 bar), e.g. at 0.01 to 5 bar, more particularly from 0.1 to 3 bar above atmospheric pressure. The sealing time, i.e. the time during which the pressure is maintained, amounts for example to 0.1 to 20 seconds, more particularly 0.1 to 3 seconds, with about 0.5 seconds being customary in particular.

The cold seal adhesives of the invention, following application to a substrate and following drying, form a coating which is preferably autoadhesive and blocking-resistant. Autoadhesive means that two coated surfaces are cold-sealable to one another. The autoadhesion of the layer of adhesive after cold sealing at 20°C and 1.4 bar is preferably at least 2 N/15 mm, or more than 2 N/15 mm. Blocking-resistant means that no stickiness is felt when the tackiness of the film surface of a dried film formed from the cold seal adhesive is evaluated by pressing a dry cleaned finger on it and remove it from the surface.

The polymer dispersions of the invention are dispersions of polymers in an aqueous medium. The medium in question may be, for example, fully demineralized water, or else mixtures of water and a water-miscible solvent such as methanol, ethanol or tetrahydrofuran. It is preferred not to use any organic solvents. The solids contents of the dispersions are preferably from 15% to 75%, more preferably from 40% to 60%, more particularly greater than 50%, by weight. The solids content may take place, for example, by appropriately adjusting the monomer amounts and/or the amount of water used in the emulsion polymerization. The average particle size of the polymer particles dispersed in the aqueous dispersion is preferably less than 400 nm, more particularly less than 300 nm. With particular preference the average particle size is between 140 and 250 nm. By average particle size here is meant the d₅₀ value of the particle size distribution, i.e., 50% by weight of the total mass of all the particles have a smaller particle diameter than the d₅₀ figure. The particle size distribution can be determined in a known way using the analytical ultracentrifuge (W. Mächtle, Makromolekulare Chemie 185 (1984), pp. 1025-1039). The pH of the polymer dispersion is set preferably at a pH of more than 4, more particularly at a pH of between 5 and 9.

For the inventive use, the composition may be composed solely of the water-dispersed polymers and the protective colloids. Alternatively it may also comprise further additives, e.g., fillers, antiblocking agents, dyes, flow control agents, or thickeners.

The polymer dispersions of the invention are preferably of low emulsifier content, which means that they comprise emulsifiers (nonpolymeric, amphiphilic, surface-active substances added to the polymerization mixture) in an amount of preferably less than 3% or less than 1% by weight. Particular preference is given to emulsifier-free systems. In one embodiment of the invention, therefore, the emulsion polymerization of the first polymer and the emulsion polymerization of the second polymer is made without emulsifier or with at most 0,5 parts by weight of emulsifier per 100 parts by weight of total monomers, especially without anionic and/or nonionic emulsifier or with at most 0,5 parts by weight of nonionic and/or anionic emulsifier per 100 parts by weight of total monomers.

In the text below, the term "(meth)acryl..." and similar designations are used as an abbreviating notation for "acryl... or methacryl...".

The term Cx alkyl (meth)acrylates means alkyl (meth)acrylates with x C-atoms in the alkyl chain.

Protective colloids are polymeric compounds which, on solvation, bind large quantities of water and are capable of stabilizing dispersions of water-insoluble polymers. In contrast to emulsifiers, they generally do not lower the interfacial tension between polymer particles and water. The number-average molecule weight of the protective colloids is preferably above 1000 g/mol, more particularly above 2000 g/mol, and preferably up to 50 000 g/mol or up to 10 000 g/mol; for example, from 1000 to 50 000 g/mol, from 1000 to 10 000 g/mol or from 2000 to 10 000 g/mol.

The protective colloids are used preferably in an amount of 0.5 to 60 parts by weight or of 1 to 30 parts by weight, more preferably from 7 to 30 parts by weight (more particularly when the overall solids content of the composition of the invention is more than 50% by weight), based on 100 parts by weight of the monomers to be polymerized. A comprehensive description of protective colloids is given in Houben-Weyl, Methoden der organischen Chemie, Volume XIV/1, Makromolekulare Stoffe [Macromolecular compounds], Georg-Thieme-Verlag, Stuttgart, 1961, pages 411 to 420. Protective colloids contemplated include, for example, amphiphilic polymers - that is, polymers having hydrophobic groups and hydrophilic groups. These may be natural polymers, such as starch, or synthetic polymers.

The protective colloid is preferably formed from at least 40% by weight of nonionic principal monomers, defined in more detail below, and also from a second kind of monomer, selected from ethylenically unsaturated acid monomers. The protective colloid may, furthermore, be formed optionally from additional, preferably nonionic, monomers. The protective colloid is composed preferably to an extent of at least 40%, more particularly from 40% to 80% or from 50% to 80% by weight of principal monomers selected from the group consisting of C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers.

Principal monomers for the protective colloid are, for example, (meth)acrylic acid alkyl esters with a C₁-C₁₀ alkyl radical, such as methyl methacrylate, methyl acrylate, n-butyl acrylate, ethyl acrylate, and 2-ethylhexyl acrylate. Also suitable in particular are mixtures of the (meth)acrylic acid alkyl esters. Vinyl esters of carboxylic acids having 1 to 20 C atoms are, for example, vinyl laurate, vinyl stearate, vinyl propionate, Versatic acid vinyl esters, and vinyl acetate. Suitable vinylaromatic compounds include vinyltoluene, alpha- and para-methylstyrene, alphabutyl-styrene, 4-n-butylstyrene, 4-n-decylstyrene, and preferably styrene, alpha-methyl styrene and mixtures thereof. Examples of nitriles are acrylonitrile and methacrylonitrile. The vinyl halides are ethylenically unsaturated compounds substituted by chlorine, fluorine or bromine, preferably vinyl chloride and vinylidene chloride. Vinyl ethers include, for example, vinyl methyl ether or vinyl isobutyl ether. Vinyl ethers of alcohols comprising 1 to 4 C atoms are preferred. Hydrocarbons having 4 to 8 C atoms and two olefinic double bonds include butadiene, isoprene, and chloroprene. Preferred principal monomers for the protective colloid are the C₁ to C₁₀ alkyl acrylates and C₁ to C₁₀ alkyl methacrylates, more particularly C₁ to C₈ alkyl acrylates and C₁ to C₈ alkyl methacrylates, and vinylaromatics, especially styrene and alpha-methylstyrene, and mixtures thereof. Very particular preference is given to methyl acrylate, methyl methacrylate, ethyl acrylate, n-butyl acrylate, n-butyl methacrylate, n-hexyl acrylate, octyl acrylate, 2-ethylhexyl acrylate, 2-propylheptyl acrylate, styrene, alpha-methylstyrene, and mixtures of these monomers.

The protective colloid is further composed preferably to an extent of at least 15%, more particularly from 15% to 60% or from 20% to 50%, by weight of ethylenically unsaturated acid monomers (also denoted as ionic monomers, in particular as anionic monomers). Ethylenically unsaturated acid monomers are, for example, ethylenically unsaturated carboxylic acids, ethylenically unsaturated sulfonic acids, and ethylenically unsaturated phosphonic acids such as vinylphosphonic acid. Ethylenically unsaturated carboxylic acids used are preferably alpha,beta-monoethylenically unsaturated monocarboxylic and dicarboxylic acids having 3 to 6 C atoms in the molecule. Examples thereof are acrylic acid, methacrylic acid, itaconic acid, maleic acid, fumaric acid, crotonic acid, vinylacetic acid, and vinyllactic acid. Suitable ethylenically unsaturated sulfonic acids include, for example, vinylsulfonic acid, styrenesulfonic acid, acrylamidomethylpropanesulfonic acid, sulfopropyl acrylate, and sulfopropyl methacrylate. Preference is given to acrylic acid and methacrylic acid and a mixture thereof, particular preference to acrylic acid. The acid monomers can be used in the form of the free acids and also in a form partially or fully neutralized with suitable bases, for the polymerization. It is preferred to use aqueous sodium or potassium hydroxide solution or ammonia as neutralizing agent.

Preferably the protective colloid
(i) is used in an amount of 7 to 30 parts by weight, based on 100 parts by weight of the sum of the monomers of the first or second polymer (respectively) to be polymerized,
(ii) is composed to an extent of at least 40% by weight, based on the sum of the monomers for the protective colloid, of nonionic principal monomers selected from the group consisting of C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers,
(iii) is composed to an extent of at least 15% by weight of ethylenically unsaturated acid monomers preferably selected from acrylic acid, methacrylic acid, and a mixture thereof, and
(iv) has a number-average molecular weight of 1000 to 10 000.

Preferably, the constitution of the protective colloid used in the polymerization of the first polymer is different from the constitution of the protective colloid used in the polymerization of the second polymer.

The protective colloid used in the polymerization of the first polymer is preferably composed to an extent of at least 40% by weight, based on the monomers of the protective colloid, of nonionic principal monomers selected from the group consisting of C2 to C8 alkyl (meth)acrylates and mixtures of these monomers, and
is composed to an extent of at least 20% by weight, based on the monomers of the protective colloid, of ethylenically unsaturated acid monomers preferably selected from acrylic acid, methacrylic acid, and a mixture thereof.

The protective colloid used in the polymerization of the second polymer is preferably composed to an extent of at least 40% by weight, based on the monomers of the protective colloid, of nonionic principal monomers selected from the group consisting of vinylaromatics having up to 20 C atoms or mixtures thereof, preferably styrene or alpha-methyl styrene or mixtures thereof, and
1 to 20 % by weight, based on the monomers of the protective colloid, of nonionic monomers selected from the group consisting of C1 to C20 alkyl (meth)acrylates, and at least 20% by weight, based on the monomers of the protective colloid, of ethylenically unsaturated acid monomers preferably selected from acrylic acid, methacrylic acid, and a mixture thereof.

The cold seal adhesive comprises a mixture of at least on first polymer and of at least one second polymer. The first polymer is a soft polymer having a low glass transition temperature of less than 0°C, preferably from -30°C to less than 0°C or from -30 °C to -5°C.

The second polymer is a hard polymer having a high glass transition temperature of more than 50°C, preferably from +50 °C to +150 °C or from +90 °C to+150 °C. The glass transition temperatures is determined by differential scanning calorimetry (ASTM D 3418-08, midpoint temperature, heating rate 20°C/min).

The weight ratio of the at least one first polymer to the at least one second polymer is preferably from 100:5 to 100:30 or from 100:10 to 100:25.

The first polymer is composed preferably to an extent of at least 60% by weight, more preferably to an extent of at least 80% by weight, e.g., from 80% to 100% by weight, or from 90% to 99% by weight, of one or more of principal monomers selected from the group consisting of C1 to C20 alkyl (meth)acrylates, preferably C1 to C10 alkyl (meth)acrylates or C2 to C8 alkyl (meth)acrylates. Examples include methyl methacrylate, methyl acrylate, n-butyl acrylate, ethyl acrylate, n-butyl methacrylate, n-hexyl acrylate, octyl acrylate, 2-propylheptyl acrylate and 2-ethylhexyl acrylate. Also suitable in particular are mixtures of the (meth)acrylic acid alkyl esters. The principal monomer of the first polymer is preferably a soft monomer, wherein soft monomers are monomers having a glass transition temperature of below 0 °C when polymerized as homopolymers, preferably alkyl acrylates with 2 to 6 carbon atoms in the alkyl group.

The first polymer is preferably composed of at least one secondary monomer selected from the group consisting of acid monomers, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and monomers with at least one hydroxy group, and mixtures of these monomers. Acid monomers may be those as mentioned above for the protective colloids, such as acrylic acid, methacrylic acid, itaconic acid, maleic acid, fumaric acid or their mixtures. Vinyl esters of carboxylic acids having 1 to 20 C atoms are, for example, vinyl laurate, vinyl stearate, vinyl propionate, Versatic acid vinyl esters, and vinyl acetate. Suitable vinylaromatic compounds include vinyltoluene, alpha- and para-methylstyrene, alpha-butylstyrene, 4-n-butylstyrene, 4-n-decylstyrene, and - preferably - styrene. Examples of nitriles are acrylonitrile and methacrylonitrile. The vinyl halides are ethylenically unsaturated compounds substituted by chlorine, fluorine or bromine, preferably vinyl chloride and vinylidene chloride. Vinyl ethers include, for example, vinyl methyl ether or vinyl isobutyl ether. Vinyl ethers of alcohols comprising 1 to 4 C atoms are preferred. Hydrocarbons having 4 to 8 C atoms and two olefinic double bonds include butadiene, isoprene, and chloroprene. Further secondary monomers are, for example, monomers comprising hydroxyl groups, more particularly C₁-C₁₀ hydroxyalkyl (meth)acrylates, and also (meth)acrylamide. Further secondary monomers that may be mentioned include phenyloxyethylglycol mono(meth)acrylate, glycidyl acrylate, glycidyl methacrylate, and amino (meth)acrylates such as 2-aminoethyl (meth)acrylate. Further secondary monomers that may be mentioned also include crosslinking monomers.

Preferably the first polymer is composed to an extent of 90% to 99% by weight of at least one C₂ to C₈ alkyl (meth)acrylate, in particular at least one C₂ to C₈ alkyl acrylate, and to an extent of 1 to 10% by weight of at least one acid monomer such as for example acrylic acid, methacrylic acid or mixtures thereof.

The second polymer is preferably composed to an extent of at least 60% by weight, more preferably to an extent of at least 80% by weight, e.g., from 80% to 100% by weight, or from 80% to 99% by weight, of principal monomers selected from the group consisting of vinylaromatics having up to 20 C atom. Suitable vinylaromatic compounds include vinyltoluene, styrene alpha-methyl styrene, para-methyl styrene, alpha-butylstyrene, 4-n-butylstyrene, 4-n-decylstyrene. Preferred are alpha-methyl styrene, styrene and mixtures thereof.

The second polymer is preferably composed of at least one secondary monomer selected from the group consisting of acid monomers, C1 to C20 alkyl (meth)acrylates, vinyl esters of carboxylic acids comprising up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and monomers with at least one hydroxy group, and mixtures of these monomers. Acid monomers may be those as mentioned above for the protective colloids, such as acrylic acid, methacrylic acid, itaconic acid, maleic acid, fumaric acid or their mixtures. Examples include (meth)acrylic acid alkyl esters with a C₁-C₁₀ alkyl radical, such as methyl methacrylate, methyl acrylate, n-butyl acrylate, ethyl acrylate, and 2-ethylhexyl acrylate. Also suitable in particular are mixtures of the (meth)acrylic acid alkyl esters. Vinyl esters of carboxylic acids having 1 to 20 C atoms are, for example, vinyl laurate, vinyl stearate, vinyl propionate, Versatic acid vinyl esters, and vinyl acetate. Examples of nitriles are acrylonitrile and methacrylonitrile. The vinyl halides are ethylenically unsaturated compounds substituted by chlorine, fluorine or bromine, preferably vinyl chloride and vinylidene chloride. Vinyl ethers include, for example, vinyl methyl ether or vinyl isobutyl ether. Vinyl ethers of alcohols comprising 1 to 4 C atoms are preferred. Hydrocarbons having 4 to 8 C atoms and two olefinic double bonds include butadiene, isoprene, and chloroprene. Further secondary monomers are, for example, monomers comprising hydroxyl groups, more particularly C₁-C₁₀ hydroxyalkyl (meth)acrylates, and also (meth)acrylamide. Further secondary monomers that may be mentioned include phenyloxyethylglycol mono(meth)acrylate, glycidyl acrylate, glycidyl methacrylate, and amino (meth)acrylates such as 2-aminoethyl (meth)acrylate. Further secondary monomers that may be mentioned also include crosslinking monomers.

Preferably the second polymer is composed to an extent of 80% to 99% by weight of styrene, alpha-methyl styrene or mixtures thereof and to an extent of from 1 to 20% by weight of acrylic acid, methacrylic acid or mixtures thereof and to an extent of from 0 to 15% by weight of at least one C₁ to C₈ alkyl (meth)acrylate.

The polymers can be prepared by emulsion polymerization, the product then being an emulsion polymer. The emulsion polymerization is generally carried out using ionic and/or nonionic emulsifiers and/or protective colloids or stabilizers as surface-active compounds, in order to support the dispersing of the monomers in the aqueous medium. In accordance with the invention it is possible to employ one or more of the above-mentioned protective colloids as sole dispersant, i.e., without the addition of emulsifiers. If desired, however, small amounts of emulsifiers can also be used as well. The emulsion polymerization preferably takes place in the presence of at least one protective colloid without the addition of a nonpolymeric emulsifier. In particular, the emulsion polymerization of the first polymer and the emulsion polymerization of the second polymer is made without emulsifier or with at most 0,5 parts by weight of emulsifier per 100 parts by weight of total monomers, especially without anionic and/or nonionic emulsifier or with at most 0,5 parts by weight of nonionic and/or anionic emulsifier per 100 parts by weight of total monomers of the first polymer or of the second polymer, respectively.

If emulsifiers are used as additional surface-active substances, they are preferably anionic or nonionic emulsifiers. Suitable emulsifiers are exemplified by ethoxylated C₈ to C₃₆ or C₁₂ to C₁₈ fatty alcohols having a degree of ethoxylation of 3 to 50 or of 4 to 30, ethoxylated mono-, di-, and tri-C₄ to C₁₂ or C₄ to C₉ alkylphenols having a degree of ethoxylation of 3 to 50, alkali metal salts of dialkyl esters of sulfosuccinic acid, alkali metal salts and ammonium salts of C₈ to C₁₂ alkyl sulfates, alkali metal salts and ammonium salts of C₁₂ to C₁₈ alkylsulfonic acids, and alkali metal salts and ammonium salts of C₉ to C₁₈ alkylarylsulfonic acids. Cationic emulsifiers are, for example, compounds having at least one amino group or ammonium group and at least one C8-C22 alkyl group. Other suitable emulsifiers are compounds of the general formula 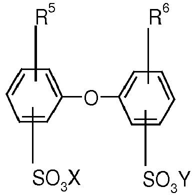 in which R⁵ and R⁶ are hydrogen or C₄ to C₁₄ alkyl but are not simultaneously hydrogen, and X and Y can be alkali metal ions and/or ammonium ions. Preferably R⁵, R⁶ are linear or branched alkyl radicals having 6 to 18 C atoms or hydrogen, and more particularly having 6, 12, and 16 C atoms, with R⁵ and R⁶ not both simultaneously being hydrogen. X and Y are preferably sodium, potassium or ammonium ions, with sodium being particularly preferred. Particularly advantageous compounds II are those in which X and Y are sodium, R⁵ is a branched alkyl radical having 12 C atoms, and R⁶ is hydrogen or R⁵. Oftentimes use is made of technical mixtures which comprise a fraction of 50% to 90% by weight of the monoalkylated product, an example being Dowfax®2A1 (trade mark of the Dow Chemical Company). Suitable emulsifiers are also found in Houben-Weyl, Methoden der organischen Chemie, volume 14/1, Makromolekulare Stoffe, Georg Thieme Verlag, Stuttgart, 1961, pages 192 to 208. Examples of emulsifier trade names include Dowfax®2A1, Emulan® NP 50, Dextrol®OC 50, Emulgator 825, Emulgator 825 S, Emu-Ian® OG, Texapon® NSO, Nekanil® 904 S, Lumiten® I-RA, Lumiten® E 3065, Disponil® FES 77, Lutensol® AT 18, Steinapol® VSL, and Emulphor® NPS 25. Also suitable are copolymerizable emulsifiers which comprise a free-radically polymerizable, ethylenically unsaturated double bond, examples being reactive anionic emulsifiers such as Adeka® Resoap SR-10.

The emulsion polymerization takes place in general at 30 to 130°C, preferably at 50 to 90°C. The polymerization medium may be composed either only of water or else of mixtures of water and water-miscible liquids such as methanol. It is preferred to use just water. The emulsion polymerization can be carried out either as a batch operation or in the form of a feed process, including staged or gradient procedures. Preference is given to the feed process, in which a portion of the polymerization batch is made the initial charge, heated to the polymerization temperature, and partially polymerized, and then the remainder of the polymerization batch, usually by way of two or more spatially separate feeds, of which one or more comprise the monomers in pure form or in emulsified form, is supplied continuously or else in stages.

The emulsion polymerization is carried out in the presence of at least one protective colloid. This means that the protective colloids are included in the initial charge or supplied together with monomers to the polymerization vessel. They are preferably included in the initial emulsion polymerization charge, while any additionally employed emulsifiers may also be supplied together with the monomers in the course of the polymerization.

For the emulsion polymerization it is possible to use the customary and known auxiliaries, such as water-soluble initiators and regulators, for example. Examples of water-soluble initiators for the emulsion polymerization are ammonium salts and alkali metal salts of peroxodisulfuric acid, e.g., sodium peroxodisulfate, hydrogen peroxide or organic peroxides, e.g., tert-butyl hydroperoxide. Also suitable are what are called reduction-oxidation (redox) initiator systems. The redox initiator systems are composed of at least one, usually inorganic, reducing agent and one organic or inorganic oxidizing agent. The oxidizing component comprises, for example, the initiators already specified above for the emulsion polymerization. The reducing components are, for example, alkali metal salts of sulfurous acid, such as sodium sulfite, sodium hydrogen sulfite, alkali metal salts of disulfurous acid such as sodium disulfite, bisulfite addition compounds with aliphatic aldehydes and ketones, such as acetone bisulfite, or reducing agents such as hydroxymethanesulfinic acid and salts thereof, or ascorbic acid. The redox initiator systems may be used in the company of soluble metal compounds whose metallic component is able to exist in a plurality of valence states. Typical redox initiator systems are, for example, ascorbic acid/iron(II) sulfate/sodium peroxodisulfate, tert-butyl hydroperoxide/sodium disulfite, tert-butyl hydroperoxide/Na hydroxymethanesulfinate, or tert-butyl hydroperoxide/ascorbic acid. The individual components, the reducing component for example, may also be mixtures, an example being a mixture of the sodium salt of hydroxymethanesulfinic acid with sodium disulfite. The stated compounds are used usually in the form of aqueous solutions, with the lower concentration being determined by the amount of water that is acceptable in the dispersion, and the upper concentration by the solubility of the respective compound in water. Generally speaking, the concentration is 0.1% to 30%, preferably 0.5% to 20%, more preferably 1.0% to 10%, by weight, based on the solution. The amount of the initiators is generally 0.1% to 10% by weight, preferably 0.5% to 5% by weight, based on the monomers to be polymerized. It is also possible for two or more different initiators to be used in the emulsion polymerization. For the removal of the residual monomers, it is usual to add initiator after the end of the actual emulsion polymerization as well.

In the polymerization it is possible to use regulators, in amounts, for example, of 0 to 0.8 part by weight, based on 100 parts by weight of the monomers to be polymerized, these regulators reducing the molar mass. Suitable examples include compounds having a thiol group such as tert-butyl mercaptan, thioglycolic acid 2-ethylhexyl ester, mercaptoethanol, mercaptopropyl tri-methoxy silane or tert-dodecyl mercaptane. Additionally it is possible to use regulators without a thiol group, such as terpinolene, for example. In one preferred embodiment the emulsion polymer is prepared using 0.05% to 0.5% by weight, based on the monomer amount, of at least one molecular weight regulator.

In one embodiment of the invention the composition is one in which the first polymer is a pure acrylate and the second polymer is a pure styrene acrylate, i.e., is composed besides optional acid monomers exclusively of alkyl (meth)acrylate monomers or of a combination of alkyl (meth)acrylate monomers and styrene or methyl styrene, the alkyl group preferably having 1 to 8 C atoms and preferably at least one monomer being ethyl acrylate or n-butyl acrylate.

A preferred aqueous cold seal adhesive is a composition wherein
the first polymer has a glass transition temperature of from -30 °C to -5 °C; and is composed to an extent of 90% to 99% by weight of at least one C₂ to C₈ alkyl (meth)acrylate and to an extent of 1 to 10% by weight of acrylic acid, methacrylic acid or mixtures thereof, and the second polymer has glass transition temperature of from +50 °C to +150 °C; and is composed to an extent of 80% to 99% by weight of styrene, alpha-methyl styrene or mixtures thereof and to an extent of from 1 to 20% by weight of acrylic acid, methacrylic acid or mixtures thereof and to an extent of from 0 to 15% by weight of at least one C₁ to C₈ alkyl (meth)acrylate; and
wherein the protective colloids have a number-average molecular weight of 1000 to 10 000 and are each used in an amount of 7 to 30 parts by weight, based on 100 parts by weight of the monomers of the respective first or second polymer to be polymerized,
wherein the protective colloid used in the polymerization of the first polymer is composed to an extent of at least 40% by weight, based on the monomers of the protective colloid, of principal monomers selected from the group consisting of C2 to C8 alkyl (meth)acrylates and mixtures of these monomers, and
is composed to an extent of at least 20% by weight, based on the monomers of the protective colloid, of ethylenically unsaturated acid monomers preferably selected from acrylic acid, methacrylic acid, and a mixture thereof, and
wherein the protective colloid used in the polymerization of the second polymer is composed to an extent of at least 40% by weight, based on the monomers of the protective colloid, of principal monomers selected from the group consisting of vinylaromatics having up to 20 C atoms or mixtures thereof, preferably styrene or alpha-methyl styrene or mixtures thereof, and 1 to 20 % by weight, based on the monomers of the protective colloid, of monomers selected from the group consisting of C1 to C20 alkyl (meth)acrylates,
and at least 20% by weight, based on the monomers of the protective colloid, of ethylenically unsaturated acid monomers preferably selected from acrylic acid, methacrylic acid, and a mixture thereof,
wherein the emulsion polymerization of the first polymer and the emulsion polymerization of the second polymer is made without emulsifier, especially without anionic and/or nonionic emulsifier, or with at most 0,5 parts by weight of nonionic and/or anionic emulsifier per 100 parts by weight of total monomers,
wherein the weight ratio of the at least one first polymer to the at least one second polymer is from 100:5 to 100:30.

The invention also provides for the use of the aqueous cold seal adhesive as described herein for producing a cold-sealable pack. Following application to a substrate and following drying, the polymer dispersion forms a coating which at room temperature (20°C) is blocking-resistant and is autoadhesive.

The cold seal adhesive of the invention is suitable for cold-sealing two arbitrary substrates, in which case
- the two substrates, at the points which are to be adhered, having been or being each coated with the composition of the invention, and
- the two substrates, if desired with exertion of pressure, being contacted, the temperature in the coated composition being less than 40°C (cold sealing; see above).

Substrates contemplated for bonding include any desired substrates, examples being substrates made of wood, metal, paper or plastic, which may be bonded to one another in any desired combination, at least one substrate preferably being a polymer film. For this purpose the substrates are coated with the composition of the invention. Coating may take place in a conventional manner, as for example by printing, more particularly by flexographic printing or by gravure printing (intaglio printing). Customary coat thicknesses (after drying) are, for example, 1 to 30 g/m², preferably 1 to 10 g/m² or 1 to 5 g/m². The composition of the invention is suitable especially for producing packaging. Packaging contemplated is that composed of any desired materials, such as of paper or, preferably, of plastic, for example. Examples cited may include packaging made from polymer films, including, if desired, metallized polymer films, e.g., of polyethylene, polypropylene, PVC, polyester and/or polyacetate.

Especially suitable for producing packaging is a double-sidedly coated carrier, the carrier having on one side (referred to below as face) an outer layer of the composition of the invention, and having on the other side (referred to below as reverse) an outer release coating. The carrier may be composed, for example, of one of the above-mentioned polymer films, or metallized polymer films, mention being made in particular of films of oriented polypropylene, polyethylene, preferably high-density polyethylene, or polyethylene terephthalate. The polymer films may also have been corona-pretreated. The composition of the invention may be coated directly onto the face of the carrier, although between the carrier and the composition of the invention there may also be other layers, examples being primer layers, barrier layers or colored or monochrome printing-ink layers, although printing ink layers are preferably located on the reverse of the carrier. It is essential that the layer of the composition of the invention be located on the outside.

The release coating may be of any desired material, and may be a polymer film, e.g., a film of oriented polypropylene, which is laminated on or coextruded, or a liquid varnish, such as a polyamide varnish, for example, which is applied and filmed; it is essential that the layer of adhesive applied to the face of the carrier (in the present case, the composition of the invention) does not adhere to the release coating (blocking resistance). The carrier is generally rolled up and later processed from the roll. In the course of rolling, the face and the reverse of the carrier come into direct contact. Adhesion of the face to the reverse would make the carrier unusable. Between the release coating and the carrier there may be further layers; those contemplated include, in turn, layers of a primer which improves the adhesion, and printing ink layers. Another function of the outer release coating is to protect the lower layers, more particularly the printing ink layer, from external exposures.

Preferred carriers have the following construction, the sequence of the layers corresponds to the spatial arrangement:
adhesive layer (composition of the invention)
carrier
optional primer layer
optional printing ink layer
release coating.

The double-sidedly coated carrier is used more particularly for producing packaging, for which purpose it is preferably bonded to itself by cold sealing, with the faces coated with the outer composition of the invention being brought into contact in each case. It is essential here that both carriers to be bonded are coated with the composition of the invention at the points that are to be bonded and that form the subsequent sealed seam. The packaging is sealed together by cold sealing of the adhesive layer as soon as the packaged contents have been introduced. The packaging is suitable especially for comestibles.

When the pack is being produced, the adhesive used for the cold seal is applied preferably in an amount of 2 to 5 g/m² (based on solids) to each closure section.

The seal strength is preferably such that the initial opening force is more than 2 N/15 mm, preferably at least 2.5 N/15 mm or at least 3 N/15 mm or at least 4 N/15 mm, e.g. 2,5 to 10 N/15 mm, measured in accordance with the method described in the examples.

Also provided by the invention is a cold-sealable coated polymer film, where a polymer carrier film is coated at least partly, i.e., at least at the areas forming the subsequent sealed seam, with an adhesive of the invention. The polymer film of the invention preferably has a first side and a second side, the first side as outer layer being coated at least partly with a composition of the invention, and the second side having as outer layer a release coating. In one embodiment the polymer carrier film of the coated polymer film of the invention is composed of polyethylene or oriented polypropylene, and the release coating is formed on the basis of polyamide. The cold sealable coated polymer film has an initial cold seal strength of preferably more than 2 N/15 mm. The polymer carrier film is preferably composed of polyethylene or oriented polypropylene.

The invention also provides for the use of the coated polymer film of the invention for producing packaging, more particularly film packaging for comestibles.

The invention also provides a method for producing a cold-sealed pack, in which an adhesive of the invention as described in more detail above is applied in the form of an aqueous polymer dispersion to a packaging substrate and is dried and cold-sealed.

### Examples

Unless the context dictates otherwise, the figures in percent always denote percent by weight. A content datum relates to the content in aqueous solution or dispersion, unless otherwise specified.

The ingredients used were as follows:
- nBa: n-butyl acrylate
- AA: acrylic acid
- MAA: methacrylic acid
- EA: ethyl acrylate
- EHA: 2-ethylhexyl acrylate
- MMA: methyl methacrylate
- VAc: vinyl acetate
- HPA: hydroxypropyl acrylate
- EHTG: 2-ethylhexyl thioglycolate
- oPP carrier film:: oriented polypropylene film
- Lumiten® I-SC: Solution of sodium sulphosuccinate/isotridecanol ethoxylate in water; stabilizer and wetting agent; anionic emulsifier

### Coating of the oPP film:

With the bar applicator, the adhesive is applied to the pretreated side of the oPP film Oppalyte ® 33MW247 and dried at 70°C for 1 minute. The coated film is lined with an oPP film coated with a polyamide-based release varnish.

### Seal strength:

Strips 15 mm wide are cut from the coated film and sealed to one another (adhesive to adhesive) on the sealing device for 0.5 seconds with 200 N (1.4 bar). 30 seconds after sealing has taken place, the peel strengths in N/15 mm are ascertained at a peel speed of 50 mm/min.

### Blocking Resistance:

The blocking resistance test is done manually. A dry film is formed from the cold seal adhesive to be tested and then the tackiness of the film surface is evaluated by pressing a dry cleaned finger on it and remove it from the surface. If there is no stickiness to be felt, the film is blocking-free.

Significant blocking means stickiness is clearly felt.

Extensive blocking means that the surface blocks more than in the case of "significant blocking".

All tests take place at room temperature (23°C).

### Polymerdispersion A (soft polymer):

### Preparation of protective colloid for first polymer:

35 parts by weight of acrylic acid and 65 parts by weight of n-butyl acrylate were polymerized in a semi-batch process in isopropanol as solvent. Tert-Butylperoctoate was used as initiator. After finishing the polymerization, the solvent is distilled off and the residue is dispersed in water with ammonia to be used as protective colloid in emulsion polymerization. The degree of neutralization is 60%. The protective colloid has a number-average molecular weight of 6400.

### Preparation of first polymer (soft polymer):

| | parts by weight |
|---|---|
| deionized water | 22,9 |
| Protective Colloid | 21,1 |
| Ammonium Hydroxide | 0,45 |
| Ethyl Acrylate | 50,51 |
| EHTG | 0,15 |
| sodium persulfate 7% in water | 2,89 |
| Sodium persulfate 2,5% in water | 2,0 |

Ethyl acrylate was polymerized using a semi-batch process in the presence of the protective colloid being neutralized in deonized water with ammonium hydroxide to a degree of neutralization of 60%. Sodium persulfate was used as initiator. Final product has a glass transition temperature Tg: -15°C and calculated overall composition (including protective colloid): 7.2 parts by weight nBA /3.9 parts by weight AA /88.9 parts by weight EA

### Polymerdispersion B (soft polymer, comparative, without protective colloid):

### Preparation of first polymer (soft polymer):

| | parts by weight |
|---|---|
| deionized water | 25,62 |
| Ascorbic Acid | 0,03 |
| Sodium Persulfate | 3,76 |
| Anionic Emulsifier 1) | 2,35 |
| Sodium hydroxide | 0,52 |
| Acrylic Acid | 0,32 |
| Styrene | 1,31 |
| Methyl Methacrylate | 5,21 |
| Hydroxy Propyl Acrylate | 1,31 |
| Vinyl Acetate | 5,21 |
| Ethyl Hexyl Acrylate | 52,3 |
| t-Butyl Hydroperoxide | 0,66 |
| Acetone Bisulfite | 0,83 |
| Lumiten® I-SC | 0,57 |

1) mixture of 3 anionic emulsifiers: Dowfax® 2 A1 (sodium salt of o-dodecyl diphenylether-disulfonate), Disponil® FES 77 (sodium salt of an alkyl ether sulfate) and Lumiten® I-SC

The monomers listed above were polymerized using a semi-batch process in the presence of sodium persulfate as initiator and anionic emulsifier for stabilization. The combination of tert-butyl hydroperoxide and acetone bisulfite was used after the polymerization for deodorization. No protective colloid was used in the polymerization. The final product has a glass transition temperature Tg: -43 °C and a calculated overall composition: 79.5 parts by weight EHA / 8 part by weight MMA /8 parts by weight VAc / 2 parts by weight styrene / 2 parts by weight HPA /0.5 parts by weight AA

### Polymerdispersion C (soft polymer, comparative, without protective colloid):

### Preparation of first polymer (soft polymer):

Synthesized in an emulsion polymerization process in presence of 1.7 wt.-% of anionic emulsifiers (mixture of Emulgator K 30 (sodium salt of a parrafine sulfonate) and Emulan OG (non-ionic fatty alcohl ethoxylate)); without protective colloid.

Glass transition temperature Tg: -23°C

### Calculated overall composition:

55 parts by weight nBA / 43 parts by weight VAc / 2 parts by weight AA

### Polymerdispersion D (hard polymer):

### Preparation of protective colloid for second polymer:

Monomers, solvent (2-ethylhexanol) and initiator (di-tert-butyl peroxide) were mixed together to form a uniform mixture. The mixture was continuously charged to a continuous stirred tank reactor operating at uniform temperature (220 °C) to form a polymer product. The polymer product was continuously withdrawn from the reactor at a rate equal to the feed rate to the reactor so as to maintain an average residence time of 15 minutes. The polymer product from the reactor was then continuously fed to a wiped film evaporator operating under vacuum and temperature where the unreacted monomer and residual solvent were evaporated from the polymer product to form a distillate stream and stripped polymer sample. The stripped polymer sample was then dispersed in water with ammonia to be used as protective colloid in emulsion polymerization.

The final product has a number-average molecular weight of 8700, and a calculated overall composition: 24 parts by weight styrene / 36 parts by weight alpha-methyl styrene / 34 parts by weight AA / 6 parts by weight EHA.

### Preparation of second polymer (hard polymer):

| | parts by weight |
|---|---|
| deionized water | 51.12 |
| Protective Colloid | 13.28 |
| Ammonium Hydroxide | 3.43 |
| Styrene | 30 |
| Ammonium persulfate | 0.25 |
| t-butyl hydroperoxide | 0.18 |
| Ascorbic Acid | 0.64 |

Styrene was polymerized using a semi-batch process in the presence of the protective colloid neutralized in deionized water with ammonium hydroxide. Ammonium persulfate was used as initiator. Combination of t-butyl hydroperoxide and ascorbic acid was used after the polymerization for deodorization. Final product has a glass transition temperature Tg: +110 °C with calculated overall composition (including protective colloid): 73,7 parts by weight styrene /11 parts by weight alpha-methyl styrene / 10,4 parts by weight AA /1,8 parts by weight EHA.

### Polymerdispersion E (hard polymer):

### Preparation of protective colloid for second polymer:

Monomers, solvent (2-ethylhexanol) and initiator (di-tert-butyl peroxide) were mixed together to form a uniform mixture. The mixture was continuously charged to a continuous stirred tank reactor operating at uniform temperature (217 °C) to form a polymer product. The polymer product was continuously withdrawn from the reactor at a rate equal to the feed rate to the reactor so as to maintain an average residence time of 15 minutes. The polymer product from the reactor was then continuously fed to a wiped film evaporator operating under vacuum and temperature where the unreacted monomer and residual solvent were evaporated from the polymer product to form a distillate stream and stripped polymer sample. The stripped polymer sample was then dispersed in water with ammonia to be used as protective colloid in emulsion polymerization. The final product has a number-average molecular weight of 9800, and a calculated overall composition: 33 parts by weight styrene / 32 parts by weight alpha-methyl styrene / 35 parts by weight AA.

### Preparation of second polymer (hard polymer):

| | parts by weight |
|---|---|
| deionized water | 48.82 |
| Protective Colloid | 12.24 |
| Ammonium Hydroxide | 2.80 |
| Styrene | 34.16 |
| Ammonium persulfate | 0.35 |
| Nonionic surfactant | 1.75 |

Styrene was polymerized using a semi-batch process in the presence of the protective colloid neutralized in deionized water with ammonium hydroxide and nonionic emulsifier. Ammonium persulfate was used as initiator. Final product has a glass transition temperature Tg: + 98 °C and calculated overall composition (including protective colloid): 82.5 parts by weight styrene / 8.4 parts by weight alpha-methyl styrene / 9.1 parts by weight AA.

### Polymerdispersion F (hard polymer, comparative without protective colloid):

### Second polymer (hard polymer):

Polyacrylate, synthesized in an emulsion polymerization process in the presence of 1,5% of anionic emulsifier (Disponil® FES 27, sodium salt of alkyl ether sulfate); without protective colloid Glass transition temperature Tg: + 70 °C

### Calculated overall composition:

60 parts by weight MMA /30 parts by weight nBA /10 parts by weight MAA.

### Polymerdispersion G (hard polymer, comparative without protective colloid):

### Preparation of second polymer (hard polymer):

| | parts by weight |
|---|---|
| deionized water | 43,11 |
| Polystyrene Seed | 5,15 |
| Styrene | 24,61 |
| Methyl methacrylate | 12,31 |
| Methacrylic Acid | 4,11 |
| Sodium persulfate | 3,52 |
| Anionic emulsifier¹⁾ | 5,45 |
| t-butyl hydroperoxide | 0,82 |
| Acetone bisulfite | 0,92 |

| | |
|---|---|
| ¹⁾ sodium salt of alkyl ether sulfate | |

The monomers listed above were emulsion polymerized using a semi-batch process in the presence of sodium persulfate as initiator. The polymers were prepared using a polystyrene seed latex and in the presence of 2% of anionic emulsifier. Final product has a glass transition temperature Tg: + 118 °C with calculated overall composition: 60 parts by weight styrene /30 parts by weight MMA /10 parts by weight MAA.

### Examples 1 to 2, comparative examples 1 to 4

Cold seal adhesives were made by mixing 100 parts by weight of a soft polymer dispersion (first polymer) with 15 parts by weight of a hard polymer dispersion. oPP films were coated with the cold seal adhesives and tested for seal strength and blocking resistance.

The results of the cold-sealing tests are set out in Table 1.

**Table 1: Results of the cold-sealing tests**

| Example | Soft polymer dispersion 100 parts* | Hard polymer dispersion 15 parts* | Seal strength [N/15 mm] | Blocking resistance |
|---|---|---|---|---|
| Example 1 | A | D | 6 | No blocking |
| Example 2 | A | E | 6 | No blocking |
| Comparative example 1 | A | - | 6 | Extensive blocking |
| Comparative example 2 | A | F | 6 | Extensive blocking |
| Comparative example 3 | A | G | 6 | Extensive blocking |
| Comparative example 4 | B | D | 2 | Significant blocking |
| Comparative example 5 | C | D | 2 | Significant blocking |

| | | | | |
|---|---|---|---|---|
| * All parts are parts by weight based on wet dispersion, that means the emulsion polymer plus the water it is dispersed in. | | | | |

The target is a seal strength of more than 2 N/15 mm, measured 30 seconds after sealing and no blocking. Examples 1 and 2 meet the target. Comparative examples 1 to 4 do not meet the target.

## Claims

1. Aqueous cold seal adhesive in the form of an aqueous polymer dispersion comprising a mixture of at least one first polymer and at least one second polymer
wherein the first polymer is an emulsion polymer composed to an extent of at least 60% by weight of principal monomers selected from the group consisting of C1 to C20 alkyl (meth)acrylates, the first polymer being preparable by emulsion polymerization of free-radically polymerizable monomers in the presence of at least one protective colloid and the first polymer having a glass transition temperature of less than 0°C;
wherein the second polymer is an emulsion polymer composed to an extent of at least 60% by weight of principal monomers selected from the group consisting of vinylaromatics having up to 20 C atom, the second polymer being preparable by emulsion polymerization of free-radically polymerizable monomers in the presence of at least one protective colloid and the second polymer having a glass transition temperature of at least 50°C,
the glass transition temperatures is determined by differential scanning calorimetry according to ASTM D 3418-08 with a heating rate off 20°C/min.

2. Aqueous cold seal adhesive according to claim 1, wherein the weight ratio of the at least one first polymer to the at least one second polymer is from 100:5 to 100:30

3. Aqueous cold seal adhesive according to any of the preceding claims, wherein the first polymer is composed of at least one secondary monomer selected from the group consisting of acid monomers, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, monomers with at least one hydroxy group and mixtures of these monomers; and wherein the second polymer is composed of at least one secondary monomer selected from the group consisting of acid monomers, C1 to C20 alkyl (meth)acrylates, vinyl esters of carboxylic acids comprising up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and monomers with at least one hydroxy group.

4. Aqueous cold seal adhesive according to any of the preceding claims, wherein the glass transition temperature of the first polymer is from -30 °C to -5 °C; and the glass transition temperature of the second polymer is from +50 °C to +150 °C

5. Aqueous cold seal adhesive according to any of the preceding claims, wherein the emulsion polymerization of the first polymer and the emulsion polymerization of the second polymer is made without emulsifier or with at most 0,5 parts by weight of nonionic and/or anionic emulsifier per 100 parts by weight of total monomers.

6. Aqueous cold seal adhesive according to any of the preceding claims, wherein the first polymer is composed to an extent of 90% to 99% by weight of at least one C₂ to C₈ alkyl (meth)acrylate and to an extent of 1 to 10% by weight of acrylic acid, methacrylic acid or mixtures thereof; and wherein the second polymer is composed to an extent of 80% to 99% by weight of styrene, alpha-methyl styrene or mixtures thereof and to an extent of from 1 to 20% by weight of acrylic acid, methacrylic acid or mixtures thereof and to an extent of from 0 to 15% by weight of at least one C₁ to C₈ alkyl (meth)acrylate.

7. Aqueous cold seal adhesive according to any of the preceding claims, wherein the protective colloids
(i) are each used in an amount of 7 to 30 parts by weight, based on 100 parts by weight of the monomers of the respective first or second polymer to be polymerized,
(ii) is composed to an extent of at least 40% by weight, based on the monomers of the protective colloid, of nonionic principal monomers selected from the group consisting of C1 to C20 alkyl (meth)acrylates, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds, and mixtures of these monomers,
(iii) is composed to an extent of at least 15% by weight, based on the monomers of the protective colloid, of ethylenically unsaturated acid monomers preferably selected from acrylic acid, methacrylic acid, and a mixture thereof, and
(iv) has a number-average molecular weight of 1000 to 10 000.

8. Aqueous cold seal adhesive according to any of the preceding claims, wherein the protective colloid used in the polymerization of the first polymer is composed to an extent of at least 40% by weight, based on the monomers of the protective colloid, of principal monomers selected from the group consisting of C2 to C8 alkyl (meth)acrylates and mixtures of these monomers, and
is composed to an extent of at least 20% by weight, based on the monomers of the protective colloid, of ethylenically unsaturated acid monomers preferably selected from acrylic acid, methacrylic acid, and a mixture thereof, and
wherein the protective colloid used in the polymerization of the second polymer is composed to an extent of at least 40% by weight, based on the monomers of the protective colloid, of principal monomers selected from the group consisting of vinylaromatics having up to 20 C atoms or mixtures thereof, preferably styrene or alpha-methyl styrene or mixtures thereof, and 1 to 20 % by weight, based on the monomers of the protective colloid, of monomers selected from the group consisting of C1 to C20 alkyl (meth)acrylates,
and at least 20% by weight, based on the monomers of the protective colloid, of ethylenically unsaturated acid monomers preferably selected from acrylic acid, methacrylic acid, and a mixture thereof.

9. Aqueous cold seal adhesive according to any of the preceding claims, wherein
the first polymer has a glass transition temperature of from -30 °C to -5 °C; and is composed to an extent of 90% to 99% by weight of at least one C₂ to C₈ alkyl (meth)acrylate and to an extent of 1 to 10% by weight of acrylic acid, methacrylic acid or mixtures thereof, and
the second polymer has glass transition temperature of from +50 °C to +150 °C; and is composed to an extent of 80% to 99% by weight of styrene, alpha-methyl styrene or mixtures thereof and to an extent of from 1 to 20% by weight of acrylic acid, methacrylic acid or mixtures thereof and to an extent of from 0 to 15% by weight of at least one C₁ to C₈ alkyl (meth)acrylate; and
wherein the protective colloids have a number-average molecular weight of 1000 to 10 000 and are each used in an amount of 7 to 30 parts by weight, based on 100 parts by weight of the monomers of the respective first or second polymer to be polymerized,
wherein the protective colloid used in the polymerization of the first polymer is composed to an extent of at least 40% by weight, based on the monomers of the protective colloid, of principal monomers selected from the group consisting of C2 to C8 alkyl (meth)acrylates and mixtures of these monomers, and
is composed to an extent of at least 20% by weight, based on the monomers of the protective colloid, of ethylenically unsaturated acid monomers preferably selected from acrylic acid, methacrylic acid, and a mixture thereof, and
wherein the protective colloid used in the polymerization of the second polymer is composed to an extent of at least 40% by weight, based on the monomers of the protective colloid, of principal monomers selected from the group consisting of vinylaromatics having up to 20 C atoms or mixtures thereof, preferably styrene or alpha-methyl styrene or mixtures thereof, and 1 to 20 % by weight, based on the monomers of the protective colloid, of monomers selected from the group consisting of C1 to C20 alkyl (meth)acrylates,
and at least 20% by weight, based on the monomers of the protective colloid, of ethylenically unsaturated acid monomers preferably selected from acrylic acid, methacrylic acid, and a mixture thereof.
wherein the emulsion polymerization of the first polymer and the emulsion polymerization of the second polymer is made without emulsifier or with at most 0,5 parts by weight of nonionic and/or anionic emulsifier per 100 parts by weight of total monomers,
wherein the weight ratio of the at least one first polymer to the at least one second polymer is from 100:5 to 100:30.

10. A cold sealable coated polymer film wherein a polymer carrier film is at least partly coated with an aqueous cold seal adhesive according to any of the preceding claims.

11. The cold sealable coated polymer film according to the preceding claim, wherein the film features an initial cold seal strength of more than 2 N/15 mm, measured as strips 15 mm wide, sealed to one another with a sealing device for 0.5 seconds with 200 N and peeled with a peel speed of 50 mm/min.

12. The coated polymer film according to any of claims 10 to 11, wherein the polymer carrier film is composed of polyethylene or oriented polypropylene.

13. The use of an aqueous cold seal adhesive according to any of claims 1 to 10 for producing a cold-sealable pack with an initial cold seal strength of preferably more than 2 N/15 mm, measured as strips 15 mm wide, sealed to one another with a sealing device for 0.5 seconds with 200 N and peeled with a peel speed of 50 mm/min.

14. A method for producing a cold-sealed pack, wherein an aqueous cold seal adhesive according to any of claims 1 to 10 is applied to a packaging substrate, dried, and cold-sealed.

## Patentansprüche

1. Wässriger Kaltsiegelklebstoff in Form einer wässrigen Polymerdispersion, die eine Mischung von mindestens einem ersten Polymer und mindestens einem zweiten Polymer umfasst,
wobei es sich bei dem ersten Polymer um ein Emulsionspolymer, das zu mindestens 60 Gew.-% aus Hauptmonomeren aus der Gruppe bestehend aus C1- bis C20-Alkyl(meth)acrylaten aufgebaut ist, handelt, wobei das erste Polymer durch Emulsionspolymerisation radikalisch polymerisierbarer Monomere in Gegenwart mindestens eines Schutzkolloids herstellbar ist und wobei das erste Polymer eine Glasübergangstemperatur von weniger als 0 °C aufweist;
wobei es sich bei dem zweiten Polymer um ein Emulsionspolymer, das zu mindestens 60 Gew.-% aus Hauptmonomeren aus der Gruppe bestehend aus Vinylaromaten mit bis zu 20 C-Atomen aufgebaut ist, handelt, wobei das zweite Polymer durch Emulsionspolymerisation radikalisch polymerisierbarer Monomere in Gegenwart mindestens eines Schutzkolloids herstellbar ist und wobei das zweite Polymer eine Glasübergangstemperatur von mindestens 50 °C aufweist,
wobei die Glasübergangstemperatur mittels Differentialkalorimetrie gemäß ASTM D-3418-08 mit einer Heizrate von 20 °C/min bestimmt wird.

2. Wässriger Kaltsiegelklebstoff nach Anspruch 1, wobei das Gewichtsverhältnis von dem mindestens einen ersten Polymer zu dem mindestens einen zweiten Polymer 100:5 bis 100:30 beträgt.

3. Wässriger Kaltsiegelklebstoff nach einem der vorhergehenden Ansprüche, wobei das erste Polymer aus mindestens einem sekundären Monomer aus der Gruppe bestehend aus Säuremonomeren, Vinylestern von Carbonsäuren mit bis zu 20 C-Atomen, Vinylaromaten mit bis zu 20 C-Atomen, ethylenisch ungesättigten Nitrilen, Vinylhalogeniden, Vinylethern von Alkoholen mit 1 bis 10 C-Atomen, aliphatischen Kohlenwasserstoffen mit 2 bis 8 C-Atomen und einer oder zwei Doppelbindungen, Monomeren mit mindestens einer Hydroxygruppe und Mischungen von diesen Monomeren aufgebaut ist; und wobei das zweite Polymer aus mindestens einem sekundären Monomer aus der Gruppe bestehend aus Säuremonomeren, C1- bis C20-Alkyl(meth)acrylaten, Vinylestern von Carbonsäuren mit bis zu 20 C-Atomen, ethylenisch ungesättigten Nitrilen, Vinylhalogeniden, Vinylethern von Alkoholen mit 1 bis 10 C-Atomen, aliphatischen Kohlenwasserstoffen mit 2 bis 8 C-Atomen und einer oder zwei Doppelbindungen und Monomeren mit mindestens einer Hydroxygruppe aufgebaut ist.

4. Wässriger Kaltsiegelklebstoff nach einem der vorhergehenden Ansprüche, wobei die Glasübergangstemperatur des ersten Polymers -30 °C bis -5 °C beträgt und die Glasübergangstemperatur des zweiten Polymers +50 °C bis 150 °C beträgt.

5. Wässriger Kaltsiegelklebstoff nach einem der vorhergehenden Ansprüche, wobei die Emulsionspolymerisation des ersten Polymers und die Emulsionspolymerisation des zweiten Polymers ohne Emulgator oder mit höchstens 0,5 Gewichtsteilen nichtionischem und/oder anionischem Emulgator je 100 Gewichtsteilen der gesamten Monomere durchgeführt werden.

6. Wässriger Kaltsiegelklebstoff nach einem der vorhergehenden Ansprüche, wobei das erste Polymer zu 90 Gew.-% bis 99 Gew.-% aus mindestens einem C₂- bis C₈-Alkyl(meth)acrylat und zu 1 bis 10 Gew.-% aus Acrylsäure, Methacrylsäure oder Mischungen davon aufgebaut ist und wobei das zweite Polymer zu 80 Gew.-% bis 99 Gew.-% aus Styrol, alpha-Methylstyrol oder Mischungen davon und zu 1 bis 20 Gew.-% aus Acrylsäure, Methacrylsäure oder Mischungen davon und zu 0 bis 15 Gew.-% aus mindestens einem C₁- bis C₈-Alkyl(meth)acrylat aufgebaut ist.

7. Wässriger Kaltsiegelklebstoff nach einem der vorhergehenden Ansprüche, wobei die Schutzkolloide
(i) jeweils in einer Menge von 7 bis 30 Gewichtsteilen, bezogen auf 100 Gewichtsteile der Monomere des jeweiligen ersten oder zweiten zu polymerisierenden Polymers, eingesetzt werden,
(ii) zu mindestens 40 Gew.-%, bezogen auf die Monomere des Schutzkolloids, aus nichtionischen Hauptmonomeren aus der Gruppe bestehend aus C1-bis C20-Alkyl(meth)acrylaten, Vinylestern von Carbonsäuren mit bis zu 20 C-Atomen, Vinylaromaten mit bis zu 20 C-Atomen, ethylenisch ungesättigten Nitrilen, Vinylhalogeniden, Vinylethern von Alkoholen mit 1 bis 10 C-Atomen, aliphatischen Kohlenwasserstoffen mit 2 bis 8 C-Atomen und einer oder zwei Doppelbindungen und Mischungen von diesen Monomeren aufgebaut sind,
(iii) zu mindestens 15 Gew.-%, bezogen auf die Monomere des Schutzkolloids, aus ethylenisch ungesättigten Säuremonomeren, die vorzugsweise aus Acrylsäure, Methacrylsäure und einer Mischung davon ausgewählt sind, aufgebaut sind und
(iv) ein zahlenmittleres Molekulargewicht von 1000 bis 10.000 aufweisen.

8. Wässriger Kaltsiegelklebstoff nach einem der vorhergehenden Ansprüche, wobei das bei der Polymerisation des ersten Polymers verwendete Schutzkolloid zu mindestens 40 Gew.-%, bezogen auf die Monomere des Schutzkolloids, aus Hauptmonomeren aus der Gruppe bestehend aus C2- bis C8-Alkyl(meth)acrylaten und Mischungen von diesen Monomeren aufgebaut ist und zu mindestens 20 Gew.-%, bezogen auf die Monomere des Schutzkolloids, aus ethylenisch ungesättigten Säuremonomeren, die vorzugsweise aus Acrylsäure, Methacrylsäure und einer Mischung davon ausgewählt sind, aufgebaut ist, und
wobei das bei der Polymerisation des zweiten Polymers verwendete Schutzkolloid zu mindestens 40 Gew.-%, bezogen auf die Monomere des Schutzkolloids, aus Hauptmonomeren aus der Gruppe bestehend aus Vinylaromaten mit bis zu 20 C-Atomen oder Mischungen davon, vorzugsweise Styrol oder alpha-Methylstyrol oder Mischungen davon und zu 1 bis 20 Gew.-%, bezogen auf die Monomere des Schutzkolloids, aus Monomeren aus der Gruppe bestehend aus C1- bis C20-Alkyl(meth)acrylaten und
zu mindestens 20 Gew.-%, bezogen auf die Monomere des Schutzkolloids, aus ethylenisch ungesättigten Säuremonomeren, die vorzugsweise aus Acrylsäure, Methacrylsäure und einer Mischung davon ausgewählt sind, aufgebaut ist.

9. Wässriger Kaltsiegelklebstoff nach einem der vorhergehenden Ansprüche, wobei das erste Polymer eine Glasübergangstemperatur von -30 °C bis -5 °C aufweist und zu 90 Gew.-% bis 99 Gew.-% aus mindestens einem C₂-bis C₈-Alkyl (meth) acrylat und zu 1 bis 10 Gew.-% aus Acrylsäure, Methacrylsäure oder Mischungen davon aufgebaut ist, und
das zweite Polymer eine Glasübergangstemperatur von +50 °C bis +150 °C aufweist und zu 80 Gew.-% bis 99 Gew.-% aus Styrol, alpha-Methylstyrol oder Mischungen davon und zu 1 bis 20 Gew.-% aus Acrylsäure, Methacrylsäure oder Mischungen davon und zu 0 bis 15 Gew.-% aus mindestens einem C1- bis C8-Alkyl(meth)acrylat aufgebaut ist; und
wobei die Schutzkolloide ein zahlenmittleres Molekulargewicht von 1000 bis 10.000 aufweisen und jeweils in einer Menge von 7 bis 30 Gewichtsteilen, bezogen auf 100 Gewichtsteile der Monomere des jeweiligen ersten oder zweiten zu polymerisierenden Polymers, eingesetzt werden,
wobei das bei der Polymerisation des ersten Polymers verwendete Schutzkolloid zu mindestens 40 Gew.-%, bezogen auf die Monomere des Schutzkolloids, aus Hauptmonomeren aus der Gruppe bestehend aus C2- bis C8-Alkyl(meth)acrylaten und Mischungen dieser Monomere aufgebaut ist und
zu mindestens 20 Gew.-%, bezogen auf die Monomere des Schutzkolloids, aus ethylenisch ungesättigten Säuremonomeren, die vorzugsweise aus Acrylsäure, Methacrylsäure und einer Mischung davon ausgewählt sind, aufgebaut ist, und
wobei das bei der Polymerisation des zweiten Polymers verwendete Schutzkolloid zu mindestens 40 Gew.-%, bezogen auf die Monomere des Schutzkolloids, aus Hauptmonomeren aus der Gruppe bestehend aus Vinylaromaten mit bis zu 20 C-Atomen oder Mischungen davon, vorzugsweise Styrol oder alpha-Methylstyrol oder Mischungen davon, und zu 1 bis 20 Gew.-%, bezogen auf die Monomere des Schutzkolloids, aus Monomeren aus der Gruppe bestehend aus C1- bis C20-Alkyl(meth)acrylaten und zu mindestens 20 Gew.-%, bezogen auf die Monomere des Schutzkolloids, aus ethylenisch ungesättigten Säuremonomeren, die vorzugsweise aus Acrylsäure, Methacrylsäure und einer Mischung davon ausgewählt sind, aufgebaut ist;
wobei die Emulsionspolymerisation des ersten Polymers und die Emulsionspolymerisation des zweiten Polymers ohne Emulgator oder mit höchstens 0,5 Gewichtsteilen nichtionischem und/oder anionischem Emulgator je 100 Gewichtsteilen der gesamten Monomere durchgeführt wird,
wobei das Gewichtsverhältnis von dem mindestens einen ersten Polymer zu dem mindestens einen zweiten Polymer 100:5 bis 100:30 beträgt.

10. Kaltsiegelfähige beschichtete Polymerfolie, wobei eine Polymerträgerfolie zumindest teilweise mit einem wässrigen Kaltsiegelklebstoff nach einem der vorhergehenden Ansprüche beschichtet ist.

11. Kaltsiegelfähige beschichtete Polymerfolie nach dem vorhergehenden Anspruch, wobei die Folie eine anfängliche Kaltsiegelfestigkeit von mehr als 2 N / 15 mm, gemessen in Form von 15 mm breiten Streifen, die mit einem Siegelgerät für 0,5 Sekunden mit 200 N aneinander gesiegelt und mit einer Abzugsgeschwindigkeit von 50 mm/min abgezogen werden, aufweist.

12. Beschichtete Polymerfolie nach einem der Ansprüche 10 bis 11, wobei die Polymerträgerfolie aus Polyethylen oder orientiertem Polypropylen besteht.

13. Verwendung eines wässrigen Kaltsiegelklebstoffs nach einem der Ansprüche 1 bis 10 zur Herstellung einer kaltsiegelfähigen Verpackung mit einer anfänglichen Kaltsiegelfestigkeit von vorzugsweise mehr als 2 N / 15 mm, gemessen in Form von 15 mm breiten Streifen, die mit einem Siegelgerät für 0,5 Sekunden mit 200 N aneinander gesiegelt und mit einer Abzugsgeschwindigkeit von 50 mm/min abgezogen werden.

14. Verfahren zur Herstellung einer kaltgesiegelten Verpackung, bei dem ein wässriger Kaltsiegelklebstoff nach einem der Ansprüche 1 bis 10 auf ein Verpackungssubstrat aufgebracht, getrocknet und kaltgesiegelt wird.

## Revendications

1. Adhésif de scellement à froid aqueux sous la forme d'une dispersion aqueuse de polymère comprenant un mélange d'au moins un premier polymère et d'au moins un deuxième polymère
dans lequel le premier polymère est un composé de polymère en émulsion à un degré d'au moins 60 % en poids de monomères principaux choisis dans le groupe constitué de (méth)acrylates d'alkyle en C1 à C20, le premier polymère pouvant être préparé par polymérisation en émulsion de monomères polymérisables par voie radicalaire en présence d'au moins un colloïde protecteur et le premier polymère ayant une température de transition vitreuse inférieure à 0 °C ;
dans lequel le deuxième polymère est un composé de polymère en émulsion à un degré d'au moins 60 % en poids de monomères principaux choisis dans le groupe constitué de vinylaromatiques ayant jusqu'à 20 atomes C, le deuxième polymère pouvant être préparé par polymérisation en émulsion de monomères polymérisables par voie radicalaire en présence d'au moins un colloïde protecteur et le deuxième polymère ayant une température de transition vitreuse d'au moins 50 °C, la température de transition vitreuse étant déterminée par calorimétrie à balayage différentiel selon ASTM D 3418-08 avec une vitesse de chauffage de 20 °C/min.

2. Adhésif de scellement à froid aqueux selon la revendication 1, dans lequel le rapport en poids de l'au moins un premier polymère à l'au moins un deuxième polymère est de 100:5 à 100:30.

3. Adhésif de scellement à froid aqueux selon l'une quelconque des revendications précédentes, dans lequel le premier polymère est composé d'au moins un monomère secondaire choisi dans le groupe constitué de monomères acides, esters vinyliques d'acides carboxyliques comprenant jusqu'à 20 atomes C, vinylaromatiques ayant jusqu'à 20 atomes C, nitriles éthyléniquement insaturés, halogénures de vinyle, éthers vinyliques d'alcools comprenant 1 à 10 atomes C, hydrocarbures aliphatiques ayant 2 à 8 atomes C et une ou deux double liaisons, des monomères avec au moins un groupe hydroxy et des mélanges de ces monomères ; et dans lequel le deuxième polymère est composé d'au moins un monomère secondaire choisi dans le groupe constitué de monomères acides, (méth)acrylates d'alkyle en C1 à C20, esters vinyliques d'acides carboxyliques comprenant jusqu'à 20 atomes C, nitriles éthyléniquement insaturés, halogénures de vinyle, éthers vinyliques d'alcools comprenant 1 à 10 atomes C, hydrocarbures aliphatiques ayant 2 à 8 atomes C et une ou deux double liaisons, et des monomères avec au moins un groupe hydroxy.

4. Adhésif de scellement à froid aqueux selon l'une quelconque des revendications précédentes, dans lequel la température de transition vitreuse du premier polymère est de -30 °C à -5 °C ; et la température de transition vitreuse du deuxième polymère est de +50 °C à +150 °C.

5. Adhésif de scellement à froid aqueux selon l'une quelconque des revendications précédentes, dans lequel la polymérisation en émulsion du premier polymère et la polymérisation en émulsion du deuxième polymère est conduite sans émulsifiant ou avec au plus 0,5 partie en poids d'émulsifiant non ionique et/ou anionique par 100 parties en poids des monomères totaux.

6. Adhésif de scellement à froid aqueux selon l'une quelconque des revendications précédentes, dans lequel le premier polymère est composé à un degré de 90 % à 99 % en poids d'au moins un (méth)acrylate d'alkyle en C₂ à C₈ et à un degré de 1 à 10 % en poids d'acide acrylique, d'acide méthacrylique ou des mélanges de ceux-ci ; et dans lequel le deuxième polymère est composé à un degré de 80 % à 99 % en poids de styrène, d'alpha-méthylstyrène ou des mélanges de ceux-ci et à un degré de 1 à 20 % en poids d'acide acrylique, d'acide méthacrylique ou des mélanges de ceux-ci et à un degré de 0 à 15 % en poids d'au moins un (méth)acrylate d'alkyle en C₁ à C₈.

7. Adhésif de scellement à froid aqueux selon l'une quelconque des revendications précédentes, dans lequel les colloïdes protecteurs
(i) sont chacun utilisés en une quantité de 7 à 30 parties en poids, sur la base de 100 parties en poids des monomères du premier ou deuxième polymère respectif devant être polymérisé,
(ii)est composé à un degré d'au moins 40 % en poids, sur la base des monomères du colloïde protecteur, de monomères principaux non ioniques choisis dans le groupe constitué de (méth)acrylates d'alkyle en C1 à C20, esters vinyliques d'acides carboxyliques comprenant jusqu'à 20 atomes C, vinylaromatiques ayant jusqu'à 20 atomes C, nitriles éthyléniquement insaturés, halogénures de vinyle, éthers vinyliques d'alcools comprenant 1 à 10 atomes C, hydrocarbures aliphatiques ayant 2 à 8 atomes C et une ou deux double liaisons, et des mélanges de ces monomères,
(iii) est composé à un degré d'au moins 15 % en poids, sur la base des monomères du colloïde protecteur, de monomères acides éthyléniquement insaturés, de préférence choisis parmi l'acide acrylique, l'acide méthacrylique, et un mélange de ceux-ci, et
(iv)a un poids moléculaire moyen en nombre de 1000 à 10 000.

8. Adhésif de scellement à froid aqueux selon l'une quelconque des revendications précédentes, dans lequel le colloïde protecteur utilisé dans la polymérisation du premier polymère est composé à un degré d'au moins 40 % en poids, sur la base des monomères du colloïde protecteur, de monomères principaux choisis dans le groupe constitué de (méth)acrylates d'alkyle en C₂ à C₈ et de mélanges de ces monomères, et
est composé à un degré d'au moins 20 % en poids, sur la base des monomères du colloïde protecteur, de monomères acides éthyléniquement insaturés, de préférence choisis parmi l'acide acrylique, l'acide méthacrylique, et un mélange de ceux-ci, et
dans lequel le colloïde protecteur utilisé dans la polymérisation du deuxième polymère est composé à un degré d'au moins 40 % en poids, sur la base des monomères du colloïde protecteur, de monomères principaux choisis dans le groupe constitué de vinylaromatiques ayant jusqu'à 20 atomes C ou des mélanges de ceux-ci, de préférence le styrène ou l'alpha-méthylstyrène ou des mélanges de ceux-ci, et 1 à 20 % en poids, sur la base des monomères du colloïde protecteur, de monomères choisis dans le groupe constitué de (méth)acrylates d'alkyle en C1 à C20,
et au moins 20 % en poids, sur la base des monomères du colloïde protecteur, de monomères acides éthyléniquement insaturés, de préférence choisis parmi l'acide acrylique, l'acide méthacrylique, et un mélange de ceux-ci.

9. Adhésif de scellement à froid aqueux selon l'une quelconque des revendications précédentes, dans lequel
le premier polymère a une température de transition vitreuse de -30 °C à -5 °C ; et est composé à un degré de 90 % à 99 % en poids d'au moins un (méth)acrylate d'alkyle en C₂ à C₈ et à un degré de 1 à 10 % en poids d'acide acrylique, d'acide méthacrylique ou des mélanges de ceux-ci, et
le deuxième polymère a une température de transition vitreuse de +50 °C à +150 °C ; et est composé à un degré de 80 % à 99 % en poids de styrène, d'alpha-méthylstyrène ou des mélanges de ceux-ci et à un degré de 1 à 20 % en poids d'acide acrylique, d'acide méthacrylique ou des mélanges de ceux-ci et à un degré de 0 à 15 % en poids d'au moins un (méth)acrylate d'alkyle en C₁ à C₈ ; et
dans lequel les colloïdes protecteurs ont un poids moléculaire moyen en nombre de 1000 à 10 000 et sont chacun utilisés en une quantité de 7 à 30 parties en poids, sur la base de 100 parties en poids des monomères du premier ou deuxième polymère respectif devant être polymérisé,
dans lequel le colloïde protecteur utilisé dans la polymérisation du premier polymère est composé à un degré d'au moins 40 % en poids, sur la base des monomères du colloïde protecteur, de monomères principaux choisis dans le groupe constitué de (méth)acrylates d'alkyle en C₂ à C₈ et de mélanges de ces monomères, et est composé à un degré d'au moins 20 % en poids, sur la base des monomères du colloïde protecteur, de monomères acides éthyléniquement insaturés, de préférence choisis parmi l'acide acrylique, l'acide méthacrylique, et un mélange de ceux-ci, et
dans lequel le colloïde protecteur utilisé dans la polymérisation du deuxième polymère est composé à un degré d'au moins 40 % en poids, sur la base des monomères du colloïde protecteur, de monomères principaux choisis dans le groupe constitué de vinylaromatiques ayant jusqu'à 20 atomes C ou des mélanges de ceux-ci, de préférence le styrène ou l'alpha-méthylstyrène ou des mélanges de ceux-ci, et 1 à 20 % en poids, sur la base des monomères du colloïde protecteur, de monomères choisis dans le groupe constitué de (méth)acrylates d'alkyle en C1 à C20,
et au moins 20 % en poids, sur la base des monomères du colloïde protecteur, de monomères acides éthyléniquement insaturés, de préférence choisis parmi l'acide acrylique, l'acide méthacrylique, et un mélange de ceux-ci,
dans lequel la polymérisation en émulsion du premier polymère et la polymérisation en émulsion du deuxième polymère est effectuée sans émulsifiant ou avec au plus 0,5 partie en poids d'émulsifiant non ionique et/ou anionique par 100 parties en poids des monomères totaux, dans lequel le rapport en poids de l'au moins un premier polymère à l'au moins un deuxième polymère est de 100:5 à 100:30.

10. Film de polymère revêtu scellable à froid dans lequel un film de support de polymère est au moins partiellement revêtu avec un adhésif de scellement à froid aqueux selon l'une quelconque des revendications précédentes.

11. Film de polymère revêtu scellable à froid selon la revendication précédente, le film présentant une résistance de scellement à froid initiale supérieure à 2 N/15 mm, mesurée sur des bandes de 15 mm de largeur, scellées les unes aux autres avec un dispositif de scellement pendant 0,5 seconde avec 200 N et décollées avec une vitesse de décollement de 50 mm/min.

12. Film de polymère revêtu selon l'une quelconque des revendications 10 à 11, dans lequel le film de support de polymère est composé de polyéthylène ou de polypropylène orienté.

13. Utilisation d'un adhésif de scellement à froid aqueux selon l'une quelconque des revendications 1 à 10 pour produire un emballage scellé à froid avec une résistance de scellement à froid initiale, de préférence supérieure à 2 N/15 mm, mesurée sur des bandes de 15 mm de largeur, scellées les unes aux autres avec un dispositif de scellement pendant 0,5 seconde avec 200 N et décollées avec une vitesse de décollement de 50 mm/min.

14. Procédé pour produire un emballage scellé à froid, dans lequel un adhésif de scellement à froid aqueux selon l'une quelconque des revendications 1 à 10 est appliqué sur un substrat d'emballage, séché et scellé à froid.
